Europäisches Patentamt

European Patent Office

Office européen des brevets

(19)

(11) Veröffentlichungsnummer: **0 169 260**
**A1**

(12) # EUROPÄISCHE PATENTANMELDUNG

(21) Anmeldenummer: **84108788.5**

(22) Anmeldetag: **25.07.84**

(51) Int. Cl.⁴: **F 16 K 27/02**
**E 03 C 1/02**

(43) Veröffentlichungstag der Anmeldung:
**29.01.86 Patentblatt 86/5**

(84) Benannte Vertragsstaaten:
**AT BE CH DE FR GB IT LI LU NL SE**

(71) Anmelder: **Böhnisch, Siegfried**
**Raingartenweg 3**
**D-7113 Neuenstein-Obersöllbach(DE)**

(72) Erfinder: **Böhnisch, Siegfried**
**Raingartenweg 3**
**D-7113 Neuenstein-Obersöllbach(DE)**

(74) Vertreter: **Utermann, Gerd, Dipl.-Ing.**
**Kilianstrasse 7 Kilianspassage Postfach 3525**
**D-7100 Heilbronn(DE)**

(54) **Abzweig- und Absperreinrichtung für Kaltwasserversorgungsnetze.**

(57) Die Abzweig- und Absperreinrichtung (10) besteht aus mehreren, durch Zugstäbe, die sich in Zugstabkanälen (27.1, 27.2) befinden, zusammengespannten Ventilgehäusen (11) aus glasfaserversärktem Kunststoff. Sie haben jeweils einen Hauptkanal (12) und einen Abzweigkanal (14), zwischen denen ein Dichtsitz (25) vorgesehen ist, auf dem mittels einer Gewindespindel (22) ein Fakltbalg (66) mit dem dichtenden Randbereich (72) aufgesetzt wird. Ein Ablaßventil mit Ventilkegel (58) und Ablaßdichtsitz (44) sperrt den aus dem Ventilraum (13) nach untenführenden Ablaßkanal (41) gegenüber der Ablaßleitung (47) ab. Unter der Ablaßleitung (47) ist eine Ablaßrinne (51) angeschraubt.

EP 0 169 260 A1

./...

Fig. 1

PATENTANWALT DIPL.-ING. GERD UTERMANN
71 HEILBRONN, Postfach 3525, Kilianstr. 7 (Kilianspassage)
Tel. (07131) 82828, Telex/Teletex 728 814 patu d  0169260
BW-Bank Heilbronn: 701 17106 00 (BLZ 620 300 50) Postscheck Stuttgart: 43016-704

Europäische Patentanmeldung

B 29. 12 EP 4
23. Juli 1984/1S

Anmelder:  Herr
Siegfried Böhnisch
Raingartenweg 3

D-7113 Neuenstein-Obersöllbach

_ 1 _

Bezeichnung:  Abzweig- und Absperreinrichtung für
Kaltwasserversorgungsnetze

Beschreibung:

Die Erfindung betrifft eine Abzweig- und Absperreinrichtung
für Kaltwasserversorgungsnetze mit mehreren Abzweigen von
einer gemeinsamen Zuführleitung mit Abzweigleitungsquerschnitten von bis zu ca. 50 mm/2 Zoll, mit Ventilgehäusen,
welche mit gleichartigen Ventilgehäusen zu einem Verteiler
vereinigt werden und wobei folgende Merkmale verwirklicht
sind:

- jedes Ventilgehäuse hat einen Hauptkanal;
- der Hauptkanal liegt horizontal;
- jedes Ventilgehäuse hat einen vom Hauptkanal abzweigenden
  Abzweigkanal;
- der Abzweigkanal verläuft vertikal;
- der Abzweiganschluß ist oben;
- zwischen Hauptkanal und Abzweigkanal ist ein Dichtsitz
  angeordnet;
- dem Dichtsitz ist ein Verschlußorgan zugeordnet;
- das Verschlußorgan wird mittels einer Gewindespindel
  dichtend auf den Dichtsitz geführt und gedrückt;
- die Gewindespindel ist in einem Halteteil drehbar
  geführt;
- die Spindelachse verläuft etwa rechtwinklig zur Hauptkanalachse und unter etwa 45° zur Abzweigkanalachse.

./2

0169260

Es ist eine Vielzahl von Abzweig- und Absperreinrichtungen
für Kaltwasserversorgungsnetze bekannt. Dabei geht es
im wesentlichen darum, an der Verteilstelle eines
Gebäudes oder an Unterverteilstellen die verschiedenen
Stränge von Trink- und/oder Brauchwasserleitungen an
die Zuführleitung anzuschließen und zum anderen einzeln
absperren und entleeren zu können. Diese Verteiler
werden mit sonstigen Ventilen, Armaturen, Wasserverbrauchszählern und dgl. gemeinsam montiert und ggf.
in Nischen oder Schränken untergebracht. Sie werden
heute in der Regel aus Metallgehäusen und einzelnen
Ventiloberteilen sowie Ablaßventilen zusammengesetzt.
Die Metallgehäuse müssen zur Schaffung der Sitze und
der Anschlußgewinde mechanisch bearbeitet werden. Das
führt zu beträchtlichen Herstellungskosten. Insbesondere
die Absperrventile sind in der Regel getrennt angebaut. Ein weiteres Problem dieser Abzweig- und Absperreinrichtungen besteht darin, daß die Ventilspindeln
nur selten gedreht werden, jedoch ständig dem unter
Druck stehenden Wasser ausgesetzt sind. Da sehr viele
Wässer ausfallende Bestandteile, insbesondere Kalk,
enthalten, werden die Spindeln mit der Zeit schwergängig. Sie sind bisher mit Stopfbuchsen abgedichtet.
Diese werden beim gewaltsamen Zuschrauben und Wiederöffnen zusätzlich gelockert. Sie müssen deshalb von
Zeit zu Zeit nachgezogen und/oder erneuert werden.

Es ist eine Vielzahl von Anreihventilen in den verschiedensten Gebieten der Technik für Hydraulikanlagen,
Pneumatikanlagen, aber auch für die Wasserversorgung,
insbesondere auch die Heizwasserversorgung bekannt,
darunter das Heizungswasserventil nach DE-OS 30 43 422.
Dieses ist speziell für den Abzweigbedarf bei Heizungen
konzipiert und hat bisher keine Anregung zu geben vermocht, ein ähnliches Ventil auch für die Kaltwasserversorgung einzusetzen. Auch die sonstigen Anregungen,
Anreihventile oder Kunststoffventile zu verwenden,

0169260

haben keinen Eingang in die Hauswasserversorgung gefunden.

Hiervon ausgehend liegt der Erfindung die Aufgabe zugrunde, eine Abzweig- und Absperreinrichtung der vorn genannten Art derart auszugestalten, daß sie besonders leicht und preiswert herzustellen, leicht zu montieren, ggf. nachträglich auszuwechseln und gut zu handhaben ist.

Erfindungsgemäß sind außer den vorn genannten Merkmalen wenigstens folgende Merkmale vorgesehen:

- das Ventilgehäuse ist ein mit allen Kanälen und Dichtsitzen im Spritzgußverfahren einstückig hergestelltes Kunststoffgehäuse;

- das Absperrorgan bewegt sich in einem Ventilraum, aus dem nach unten ein Ablaßkanal abzweigt, in dem ein Ablaßventil in einem Ablaßventilraum angeordnet ist, der mit einer nach unten führenden Ablaßleitung verbunden ist.

Während bei den üblichen Rotgußventilen das Absperrventil getrennt angesetzt ist, ist es nunmehr in das Gehäuse integriert, vor allem aber ist das Gehäuse ohne weitere Nacharbeit mit den notwendigen Kanälen und Dichtsitzen montagefertig aus Kunststoff hergestellt, wie es für das Warmwasserventil aus der DE-OS 30 43 422 bekannt ist. Es war jedoch nicht zu erwarten, daß solche einem wesentlichen höheren Druck ausgesetzte Ventile, die viele Jahre und Jahrzehnte im Dauergebrauch in Einsatz sind, geeignet aus Kunststoff hergestellt werden können. Als Kunststoff eignen sich dafür vor allem glasfaserverstärkte Polyamide, die beispielsweise mit Glasfaser in Längen von etwa 0,2 bis 0,4 mm und Durchmessern von etwa 10 µm verstärkt werden und Anteile von etwa 35 %

./4

0169260

Glasfaser haben und dadurch zu Kunststoffen für Gehäuse
mit sehr hoher Steifigkeit und Maßhaltigkeit sowie
hoher Alterungsbeständigkeit führen.

An sich können solche Gehäuse auch mit Schraubverbindungen
untereinander ausgestattet sein. Besonders zweckmäßig ist
es jedoch, wenn das Ventilgehäuse stirnseitig Anlagedichtflächen für die Aufnahme je einer Preßdichtung
aufweist und sich längs durch die Ventilkörper erstreckende
Zugelemente zum Verspannen mehrerer Ventilgehäuse vorgesehen sind. Diese an sich bekannte Bauart bringt erhebliche Montagevorteile auch bei Auswechseln einzelner
Ventile oder beim zusätzlichen Anbauen weiterer Abzweigungen. Als Zugelemente kommen Zugstäbe in Frage,
die in einander zur Hauptkanalmitte diagonal gegenüberliegenden in der Gehäusewand ausgebildeten Zugstabkanälen verlaufen.

Während das Hauptabsperrventil mit seiner Spindel normalerweise ständig
dem Wasser ausgesetzt ist, läßt sich ein Ablaßventil
günstig so gestalten, daß seine Spindel stets trocken
ist. Dafür sieht man zweckmäßig vor, daß das Ablaßventil einen im Gehäuse ausgeformten wulstförmigen
Dichtsitz aufweist, auf dem ein Kegelverschlußelement
eines mit einer Ringdichtung im Ventilgehäuse geführten Verschlußorgans mit zylindrischer Dichtfläche
aufsitzt. So braucht nur eine        Spindel mit
einem Zylinderende und Kegelsitz ausgestattet und
eingeschraubt zu werden. Sie kann in einem direkt gebildeten Kunststoffgewinde oder ggf. in einem eingespritzten oder eingepreßten Metallteil drehbar geführt
sein.

Beim Entleeren der einzelnen Wasserstränge zurückfließendes Wasser muß einem Abfluß zugeführt werden.
Dafür werden in der Regel recht aufwendige Abflußrinnen montiert. Insbesondere bei Anordnung der Verteiler im Wohnbereich ist auf absolute Trockenheit zu achten.
Die Erfindung bietet einen günstigen Weg zur Ausgestaltung einer Ablaßrinne in der Weise, daß die Ablaßleitung zu einer unteren horizontalen Dichtfläche
führt, unter der eine sich über mehrere Ventilgehäuse
erstreckende Ablaßrinne mit eingelegten Flächendichtungen
dichtend untergeschraubt ist. So kann auch der gesamte
Ablaßbereich dicht geführt werden, ohne daß es einen
wesentlichen Aufwandes bedürfte, da die Dichtflächen
und die Auflagen für die Einlegedichtungen bei der
Spritzgußherstellung preiswert gebildet werden können.

Eine weitere vorteilhafte Gestaltung sieht vor, daß
der Abzweigkanal an seinem oberen Ende ein Außengewinde
und ein Innengewinde aufweist. Diese werden gemäß
seinem Querschnitt als passende Rohrgewinde für entsprechendes Einschrauben von Rohren oder Aufschrauben
von Überwurfmuttern gestaltet. So können die üblichen
Anschlußverschraubungen gut verwendet werden. An
dieser Stelle kann in den Abzweigkanal ein aus Metall,
vorzugsweise Rotguß oder Messing, bestehendes Gewindeteil eingespritzt sein. Ein solches Gewindeteil ist
in der Serienfertigung wesentlich preiswerter als das
getrennte Schneiden von Gewinden an großen Gußstücken,
weshalb auch beträchtliche Vorteile im Kunststoff-
Spritzgußteil mit eingesetzen Gewinden liegen. Je nach
Größe der Anschlußgewinde und dem verwendeten Werkstoff
kann jedoch ggf. auch auf das Einlegeteil verzichtet
werden und man kann ggf. mit gröberen Gewinden und gesonderten Überwurfmuttern die geeigneten Anschlüsse für
Rohre oder Schläuche herstellen. Das Gesamtgehäuse ist
im Bereich eines Hauptkanales zweckmäßig mit einem
vom Abzweigkanal abstehenden, etwa zylinderförmigen
längeren Teil gebildet, der einen ausreichenden Abstand
zum Nachbarventil zum Zwecke des Drehens einer Handhabe
bildet, außerdem die Unterbringung von Beschriftungsschildern und bei zylindrischer Ausbildung eine

Abstützung mit üblichen Rohrschellen gestattet.

Die Lage der Zugstabkanäle wird zweckmäßig so gewählt, daß an den einen Zugstabkanal unmittelbar die Sitzfläche für das Hauptabsperrventil anschließt. So stützt sich der Druck der Schließspindel auf massiven Gehäuseteilen ab und das Ausbrechen oder Ausweichen des Dichtsitzes ist auch bei relativ geringer Wandstärke nicht zu befürchten.

Ein weiteres wichtiges, auch unabhänig von übrigen Merkmalen der Erfindung realisierbares Erfindungsmerkmal sieht vor, daß das Absperrorgan einen Faltbalg aufweist, welcher mit dem Halteteil der Gewindespindel dichtend im Gehäuse eingespannt ist und im Bereich des Verschlußorganes eine Druckplatte aufweist, auf der sich die Spindel abstützt. Dadurch kann auf eine Stopfbuchse mit all ihren Nachteilen verzichtet werden und die Spindel ist vom Wasser frei. Solche Faltbälge sind in anderen Ventilen bekannt, im Bereich der Wasserabsperrorgane von Hausversorgungen jedoch bisher unverständlicherweise nicht eingesetzt. Sie führen jedoch zu beträchtlichen Vorteilen. Das Tropfen und Nachspannen der Stopfbuchsen entfällt. Die Ventile sind auch nach Jahren und Jahrzehnten leichtgängig. Da keine häufige Betätigung erfolgt, nutzt der Faltbalg auch nicht ab. Seine Druckplatte wird zweckmäßig unten an der Gewindespindel drehbar geführt und beim Zurückschrauben der Spindel in die Ausgangslage zurückgezogen. Die Druckplatte wird so bemessen, daß sie sich durchbiegt, wenn zu große Kraft aufgewandt wird und nicht das Ventilgehäuse zerstört. So kann man auch hier Einsparungen erzielen. Für den Faltbalg kommt vor allem ein Werkstoff mit etwa 70° sh auf der Basis von Äthylen-Propylen-Terpolymer-Kautschuk (EPDM) in Frage. Weitere Einzelheiten, Vorteile, Merkmale und Gesichtspunkte sind auch in dem nachfolgenden, anhand der Zeichnungen abgefaßten Beschreibungsteil behandelt.

Ein Ausführungsbeispiel der Erfindung wird nachfolgend
anhand der Zeichnungen näher erläutert und beschrieben.

Es zeigen:

Fig. 1    Einen Vertikalschnitt durch ein einzelnes
          Ventil in der Ebene der Spindelachsen;

Fig. 2    die Draufsicht auf ein Ventil nach Fig. 1
          ohne angeschlossene Leitung;

Fig. 3    eine Seitenansicht eines einzelnen Ventils
          von der Seite des kurzen Zylinderansatzes;

Fig. 4    eine schematische Ansicht von zwei zusammenmontierten Ventilen mit Anschlußverschraubung
          und Abdeckplatte sowie Ablaßrinne.

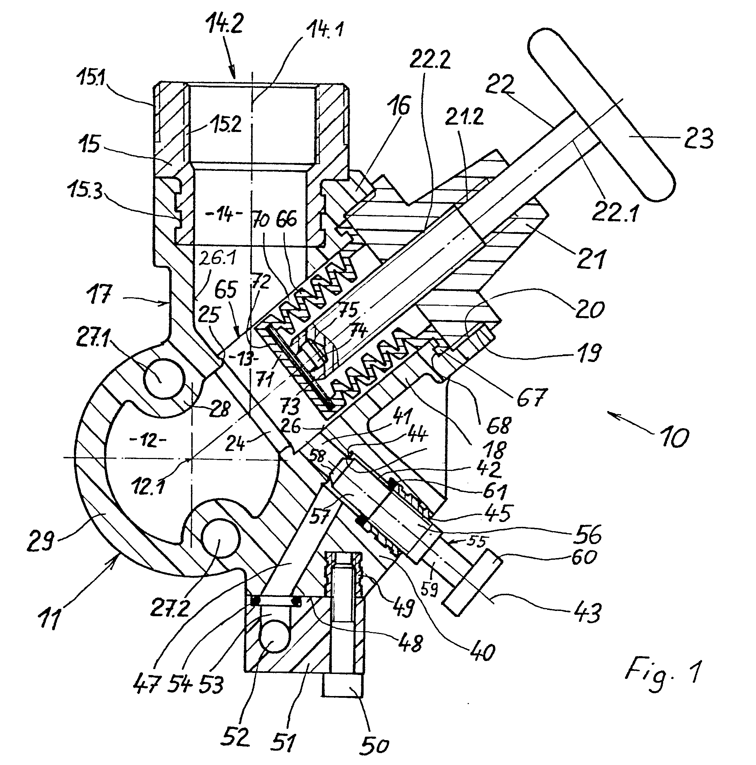

Die Abzweig- und Absperreinrichtung 10 nach den Fig. 1
bis 3 hat ein Ventilgehäuse 11, welches im ganzen aus
Kunststoff im Spritzgußverfahren hergestellt ist. Der
verwendete Werkstoff ist ein Polyamid 66-Kunststoff
auf der Grundlage von Polyhexamethylenadipamid und
ist mit etwa 35 % Glasfasern der vorn angegebenen
Abmessungen gefüllt, so daß ein Gehäuse mit sehr
hoher Steifigkeit und Maßhaltigkeit sowie hoher
Alterungsbeständigkeit geschaffen ist.

In dem Ventilgehäuse 11 sind ein Hauptkanal 12, ein Ventilraum 13 und ein
Abzweigkanal 14 gebildet. Die Hauptkanalachse 12.1 verläuft horizontal, während die Abzweigkanalachse 14.1
vertikal verläuft. Der Abzweiganschluß 14.2 liegt
oben. Hier ist ein metallenes Gewindeteil 15 eingespritzt. Es hat ein Außengewinde 15.1 zum Aufschrauben
einer Überwurfmutter und ein Innengewinde 15.2 zum
Einschrauben eines Rohrstutzens oder eines Anschlußnippels. Dabei sind die Abmessungen hier etwa für 1"
(ein Zoll)Rohre geschaffen, so daß der Innendurchmesser di

0169260

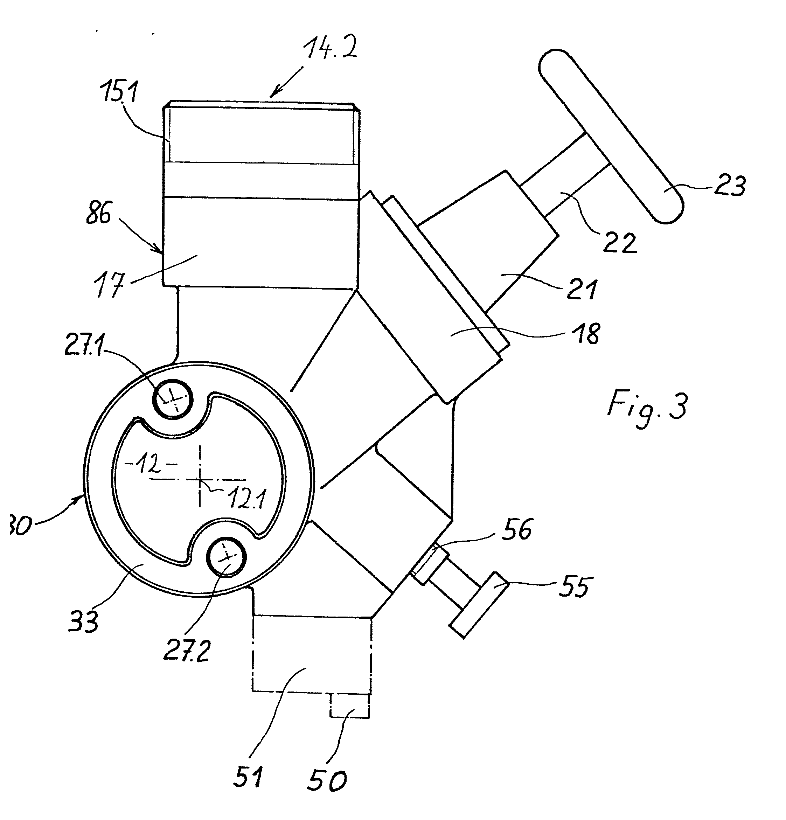

des Abzweigkanals 14 etwa 28 mm beträgt. Das metallene Gewindeteil 15 hat in seinem unteren Bereich den gleichen Innendurchmesser, jedoch einen geringeren Außendurchmesser als das Kunststoffteil und dort eine Verbindungsprofilierung 15.3, mittels der es mit dem Gehäusebereich 16 ausziehfest und verdrehfest verbunden ist. Wie aus den Fig. 1 und 3 ersichtlich, wird der Abzweigkanal von einem rohrförmigen Gehäuseteil 17 gebildet, der nach oben aufragend an den Gesamtkörper angeformt ist. In seinem unteren Bereich geht er in den Ventilansatz 18 über. Dieser umschließt den Ventilraum 13 und hat eine Einschraubbohrung 19 für das Gewinde 20 des Halteteiles 21 für die Gewindespindel 22. Diese hat am äußeren Ende ein Handrad 23. Die Spindelachse 22.1 schneidet die Hauptkanalachse 12.1 und steht senkrecht auf dieser. Gegenüber der Horizontalen ist sie um etwa 40 bis 45° nach oben geneigt. Die Abzweigkanalachse 14.1 steht vertikal und schneidet die Spindelachse 22.1, jedoch nicht die Hauptkanalachse 12.1, sondern ist zu dieser in Fig. 1 nach rechts um einen Betrag von etwa 14 mm versetzt, damit eine geeignete Abzweigöffnung 24 geschaffen wird, die ein gutes Überströmen der notwendigen Menge von etwa 0,9 l/s bei 500 mm WS für normale Zollwasserleitungen ermöglicht. Die Hauptkanalwand hat bei der Abzweigöffnung 24 einen in Richtung auf die Spindel 22 weisenden wulstförmigen Dichtsitz 25. Dieser geht nach oben in die Wand 26.1 des Abzweigkanals 14 über und im übrigen in die Wand 26 des Ventilraumes 13. Im Bereich der Wand 26 und des Dichtsitzes 25 ist - wie aus Fig. 1 ersichtlich - eine stärkere Materialansammlung dadurch gegeben, daß hier ein Zugstabkanal 27.1 gebildet ist, der zu einer rippenartigen Zugstabkanalwand 28 im Inneren des Hauptkanales 12 führt, während die Gehäusewand 29 im übrigen auch in diesem Bereich halbzylinderförmig gestaltet ist. Diagonal bezüglich der Hauptkanalachse 12.1 gegenüberliegend ist der Zugstabkanal 27.2 von gleichen Abmessungen und gleicher Wandausbildung gebildet. Die Zugstabkanäle

0169260

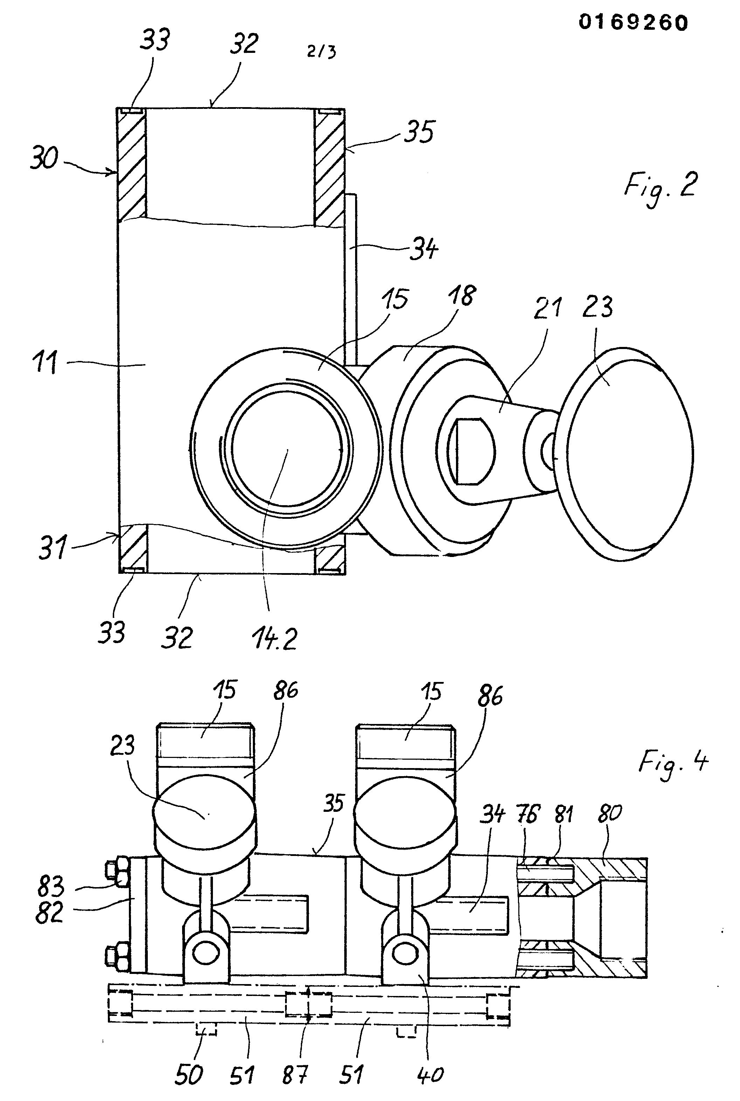

27.1 und 27.2 sind so bemessen, daß ein Zugstab von 8 mm ⌀ durchgesteckt werden kann. Der Innenradius des Hauptkanals 12 beträgt etwa 20 mm. Der Außenradius bis zur Außenfläche der Wand 29 des Gehäuses in diesem Bereich beträgt etwa 29 bis 30 mm, so daß sich eine Wandstärke von knapp 10 mm ergibt. Wie aus den Fig. 2 bis 4 ersichtlich, ist der übrige Bereich des Hauptkanals 12 des Gehäuses 11 außerhalb der Anordnung des Ventils als im wesentlichen zylindrischer Körper oder zylindrischer Fortsatz 30 gestaltet. Dabei ist aus der Fig. 2 und 4 ersichtlich, daß die Spindelachse 22.1 sehr stark zur einen Seite des Gehäuses 11 versetzt ist und sich auf dieser Seite nur ein kurzer Zylinderansatz 31 findet, während der Zylinderteil 30 etwa die gleiche Länge hat, wie die Ventilbereiche breit sind. Dadurch ergibt sich beim Aneinanderreihen ein ausreichender Abstand zwischen den Handrädern 23. Der Zylinderfortsatz 30 und der kurze Zylinderansatz 31 enden jeweils in einer ebenen Anlagedichtfläche 32, in die eine Ringnut 33 zur Aufnahme einer Preßdichtung eingeformt ist. Dabei kann die Ringnut 33 die aus Fig. 3 ersichtliche Form haben, die sich um die Zugstabkanäle 27.1 und 27.2 erstreckt, so daß auch diese Bereiche abgedichtet werden.

Außen auf dem Zylinderansatz 31 ist eine Einschiebeaufnahme 34 für ein Beschriftungsschild ausgebildet, während der äußerste Randbereich 35 glatt und zylindrisch ist zur Anbringung einer üblichen Halteschelle.

An den Ventilraum 13 schließt sich nach unten ein in die Gehäusewand übergehender Ablaßventilbereich 40 an, der eine Gehäuseausbildung entsprechend den notwendigen Kanälen darstellt. Dabei ist eine Ablaßkanal 41 mit einem Ablaßventilraum 42 gebildet, die eine Ablaßventilachse 43 haben. Der Ablaßkanal 41 geht in einen Ablaßdichtsitz 44 über, der wulstförmig ist

0169260

und von dem im Durchmesser etwas größeren zylindrischen Ablaßventilraum 42 begrenzt wird. An diesen schließt sich nach außen eine Gewindebohrung 45 an. Von dem Ablaßventilraum 42 führt nach unten eine Ablaßleitung 47, die bis zu einer ebenen Dichtungsanlagefläche 48 reicht, welche horizontal verläuft und das eigentliche Ventilgehäuse 11 nach unten abschließt. Daneben ist im Gehäuse eine von unten zugängliche vertikale Gewindesackbohrung 49 vorgesehen. In diese ist die Schraube 50 für das Halten einer Ablaßrinne 51 eingeschraubt. Die Ablaßrinne 51 hat eine Ablaßrinnenbohrung 52 und einen nach oben reichenden Anschlußrohrteil 53, der von einer Ringdichtung 54 umgeben ist, die sich in einer entsprechenden Auflagenut unter die Dichtungsanlagefläche 48 preßt.

In die Gewindebohrung 45 ist ein Ablaßventilelement 55 eingeschraubt. Es hat einen Gewindeschaft 56 und eine zylindrische Dichtfläche 57, die am Ende in einen Dichtkegel 58 übergeht. Auf dem äußeren Schaft 59 ist ein Handrad 60 angebracht. Im Bereich des Auslaufs des Gewindes 45 ist ein O-Ring 61 eingelegt, in dem die zylindrische Dichtfläche 57 beim Drehen des Handrades 60 gleitet. Der Dichtkegel 58 sitzt auf dem wulstförmigen Ablaßdichtsitz 44 dichtend auf, so daß normalerweise kein Wasser in den Ablaßventilraum 42 und die Ablaßleitung 47 gelangt. Beim Aufdrehen des Handrades 60 kann das Wasser aus der Abzweigleitung und dem Abzweigkanal 14 durch den Ablaßkanal 41, den Ventilraum 42 und die Ablaßleitung 47 zur Ablaßrinne 51 in die Ablaßrinnenbohrung 52 und zum Abfluß gelangen.

Ein weiteres wichtiges Merkmal der Erfindung ist die Ausbildung des Hauptabsperrventils 65 mit einem Faltbalg 66. Dieser hat einen Einspannwulst 67, mit dessen Hilfe er in einer Gehäusenut 68 von dem Halteteil 21 dichtend gehalten wird. Der Faltenmantel 70 hat mehrere dem Hub entsprechende Falten und geht in einen Dichtungsboden 71 über, dessen Randbereich 72 sich auf den Dichtsitz 25 aufsetzt, wenn die Spindel 22 ganz in das
Gehäuse hineingedreht ist. Innerhalb des Faltbalges
ist eine Druckplatte 73 vorgesehen, die mit einem
Halteansatz 74 versehen ist, der in eine Bohrung 75
der Spindel eingesetzt und darin gegen Herausfallen
gesichert ist. Die Druckplatte nimmt bis auf eine
geringe Wandstärke die ganze Bodenfläche ein und ist
so ausgebildet, daß ein guter, sicherer, dichter Abschluß
auf dem Ventilsitz 25 erfolgt, daß bei zu starkem Hineindrehen jedoch ein Durchbiegen der Druckplatte und nicht Zerstören des
Ventiles auftritt. Der Faltbalg 66 verhindert, daß
Wasser an die Spindel 22 und an das Halteteil 21 gelangt.
So ist keine Stopfbuchsendichtung erforderlich und
der Gewindeteil 22.2 der Spindel und das Gewinde 21.2 des
halteteils von Wasser und Kalk frei, so daß es auch noch
nach sehr langer Zeit  leichtgängig ist. Ein Faltbalg
verursacht nur geringfügig mehr Herstellungskosten,
kann leicht ausgetauscht werden und erfordert vor allem
kein Nachstellen einer Stopfbuchse. In Verbindung mit
der günstigen Ausbildung des Ventils bietet er besondere
Vorteile für ein langlebiges, leicht zu handhabendes,
wartungsfreies Abzweig- und Absperrventil. Er besteht aus
Kautschuk oder einem geeigneten Kunststoff, insbesondere
EPDM (Äthylen-Propylen-Terpolymer-Kautschuk).

Die Fig. 4 veranschaulicht, wie mehrere Abzweig- und
Absperreinrichtungen 10 mit ihren Anlagedichtflächen 32
unter Beilage von Dichtungen zusammengespannt sind.
Zugstäbe 76 erstrecken sich durch die Zugstabkanäle 27.1
und 27.2 und sind am rechten Ende in ein Anschlußstück 80
eingeschraubt. Eine Dichtung 81, die den Dichtungen in
den Nuten 33 entspricht, sichert auch hier den dichten
Anschluß. An der linken Seite der dargestellten Verteileranordnung ist ein Deckel 82 entsprechender Kreisscheibenform mit den Zugstäben 76 und den darauf
aufgeschraubten Muttern 83 festgespannt, so daß sich
eine dichte Anordnung mit einer Hauptleitung 85 und

0169260

drei Abzweigen 86 ergibt. Die Ablaßrinne 51 ist in zwei
Abschnitte unterteilt dargestellt, die unter Beilage
von Dichtungen 87 miteinander verbunden und mit den
Schrauben 50 gehalten sind. Je nach Bedürfnissen können
die Ventile aneinandergereiht und zusammengespannt
werden.

.-.-.-.-.-.

PATENTANWALT DIPL.-ING. GERD UTERMANN
71 HEILBRONN, Postfach 3525, Kilianstr. 7 (Kilianspassage)
Tel. (07131) 82828, Telex/Teletex 726 814 patu d **0169260**
BW-Bank Heilbronn: 701 17106 00 (BLZ 620 300 50) Postscheck Stuttgart: 43016-704

Europäische Patentanmeldung                    B 29. 12 EP 4
                                               23. Juli 1984/1S

Anmelder:        Herr
                 Siegfried Böhnisch
                 Raingartenweg 3

                 D-7113 Neuenstein-Obersöllbach
                 _12a_

Bezeichnung:     Abzweig- und Absperreinrichtung für
                 Kaltwasserversorgungsnetze

Bezugszeichenliste:

| | | | |
|---|---|---|---|
| 10 | Abzweig- und Absperreinrichtung | 23 | Handrad |
| 11 | Ventilgehäuse | 24 | Abzweigöffnung |
| 12 | Hauptkanal | 25 | Dichtsitz |
| 12.1 | Hauptkanalachse | 26 | Wand |
| 13 | Ventilraum | 27.1 | Zugstabkanal |
| 14 | Abzweigkanal | 27.2 | Zugstabkanal |
| 14.1 | Abzweigkanalachse | 28 | Zugstabkanalwand |
| 14.2 | Abzweiganschluß | 29 | Gehäusewand |
| 15 | Gewindeteil | 30 | Zylinderfortsatz |
| 15.1 | Außengewinde | 31 | Zylinderansatz |
| 15.2 | Innengewinde | 32 | Anlagedichtfläche |
| 15.3 | Verbindungsprofilierung | 33 | Ringnut |
| 16 | Gehäusebereich | 34 | Einschiebeaufnahme |
| 17 | Gehäuseteil | 35 | Randbereich |
| 18 | Ventilansatz | 40 | Ablaßventilbereich |
| 19 | Einschraubbohrung | 41 | Ablaßkanal |
| 20 | Gewinde | 42 | Ablaßventilraum |
| 21 | Halteteil | 43 | Ablaßventilachse |
| 21.2 | Gewinde | 44 | Ablaßdichtsitz |
| 22 | Gewindespindel | 45 | Gewindebohrung |
| 22.1 | Spindelachse | 47 | Ablaßleitung |
| 22.2 | Gewindeteil | 48 | Dichtungsanlagefläche |

./2

| 49 | Gewindesackbohrung |
|----|--------------------|
| 50 | Schraube |
| 51 | Ablaßrinne |
| 52 | Ablaßrinnenbohrung |
| 53 | Anschlußrohrteil |
| 54 | Ringdichtung |
| 55 | Ablaßventilelement |
| 56 | Gewindeschaft |
| 57 | zylindrische Dichtfläche |
| 58 | Dichtkegel |
| 59 | äußerer Schaft |
| 60 | Handrad |
| 61 | O-Ring |
| 65 | Hauptabsperrventil |
| 66 | Faltbalg |
| 67 | Einspannwulst |
| 68 | Gehäusenut |
| 70 | Faltenmantel |
| 71 | Dichtungsboden |
| 72 | Randbereich |
| 73 | Druckplatte |
| 74 | Halteansatz |
| 75 | Bohrung |
| 76 | Zugstab |
| 80 | Anschlußstück |
| 81 | Dichtung |
| 82 | Deckel |
| 83 | Mutter |
| 85 | Hauptleitung |
| 86 | Abzweige |
| 87 | Dichtung |
| di | Innendurchmesser |

Europäische Patentanmeldung
B.29. 12 EP.4
23. Juli 84/1S
0169260

Anmelder: Herr Siegfried Böhnisch, Raingartenweg 3,
D-7113 Neuenstein-Obersöllbach

Bezeichnung: Abzweig- und Absperreinrichtung für Kaltwasserversorgungsnetze

— 1 —

Ansprüche:

1. Abzweig- und Absperreinrichtung (10) für Kaltwasserversorgungsnetze mit mehreren Abzweigen (86) von einer
gemeinsamen Zuführleitung (85) mit Abzweigleitungsquerschnitten (di) von bis zu ca. 50 mm/2 Zoll, mit
Ventilgehäusen (11), welche mit gleichartigen Ventilgehäusen (11) zu einem Verteiler vereinigt werden und
wobei folgende Merkmale verwirklicht sind:

- jedes Ventilgehäuse (11) hat einen Hauptkanal (12);

- der Hauptkanal (12) liegt horizontal;

- jedes Ventilgehäuse (11) hat einen vom Hauptkanal(12)
  abzweigenden Abzweigkanal (14);

- der Abzweigkanal (14) verläuft vertikal;

- der Abzweiganschluß (14.2) ist oben;

- zwischen Hauptkanal (12) und Abzweigkanal (14) ist
  ein Dichtsitz (25) angeordnet;

- dem Dichtsitz (25) ist ein Verschlußorgan (66, 71, 72)
  zugeordnet;

- das Verschlußorgan (66, 71, 72) wird mittels einer
  Gewindespindel (22) dichtend auf den Dichtsitz (25)
  geführt und gedrückt;

- die Gewindespindel (22) ist in einem Halteteil (21)
  drehbar geführt;

- die Spindelachse (22.1) verläuft etwa rechtwinklig
  zur Hauptkanalachse (12.1) und unter etwa 45° zur
  Abzweigkanalachse (14.1);

als Kennzeichnung sind mindestens folgende Merkmale
vorgesehen:

- das Ventilgehäuse (11) ist ein mit allen Kanälen
  (12, 13, 14, 41, 42, 47) und Dichtsitzen (25, 44)
  im Spritzgußverfahren einstückig hergestelltes
  Kunststoffgehäuse;

- das Absperrorgan (66) bewegt sich in einem Ventilraum(13),
  aus dem nach unten ein Ablaßkanal (41) abzweigt, in dem
  ein Ablaßventil (55, 58, 44) in einem Ablaßventilraum(42)
  angeordnet ist, der mit einer nach unten führenden
  Ablaßleitung (47) verbunden ist.                    ./2

25. Juli 1984/1S

0169260

2. Einrichtung nach Anspruch 1,
d a d u r c h   g e k e n n z e i c h n e t ,
daß das Ventilgehäuse (11) aus glasfaserverstärktem Kunststoff, vorzugsweise einem Polyamid 66
Kunststoff auf der Grundlage von Polyhexamethylenadipamid mit 35 %.Glasfasern von etwa 0,2 bis 0,4 mm
Länge und Durchmesser von etwa 10 µm besteht.

3. Einrichtung nach Anspruch 1 oder 2,
d a d u r c h   g e k e n n z e i c h n e t ,
daß das Ventilgehäuse (11) stirnseitig Anlagedichtflächen (32) für die Aufnahme je einer Preßdichtung aufweist und sich längs durch die Ventilgehäuse erstreckende Zugelemente (76) zum Verspannen mehrerer Ventilgehäuse vorgesehen sind.

4. Einrichtung nach Anspruch 3,
d a d u r c h   g e k e n n z e i c h n e t ,
daß als Zugelemente zwei Zugstäbe (76) vorgesehen
sind, die in einander zur Hauptkanalachse (12.1)
diagonal gegenüberliegenden, in der Gehäusewand (29)
ausgebildeten Zugstabkanälen (27.1, 27.2) verlaufen.

5. Einrichtung nach wenigstens einem der vorstehenden
Ansprüche,
d a d u r c h   g e k e n n z e i c h n e t ,
daß das Ablaßventil einen im Gehäuse (11) ausgeformten wulstförmigen Ablaßdichtsitz (44) aufweist, auf dem ein Dichtkegel (58) eines mit einer
Ringdichtung (61) im Ventilgehäuse (11) abgedichtet
geführten Verschlußorgans mit zylindrischer Dichtfläche (57) aufsitzt.

6. Einrichtung nach wenigstens einem der vorstehenden
Ansprüche,
d a d u r c h   g e k e n n z e i c h n e t ,
daß die Ablaßleitung (47) zu einer unteren horizontalen
Dichtungsanlagefläche (48) führt, unter der eine sich über mehrere Ventilgehäuse (11) erstreckende Ablaßrinne (51) mit eingelegten Flächendichtungen (54)
dichtend untergeschraubt ist.

7. Einrichtung nach wenigstens einem der vorstehenden
Ansprüche,
d a d u r c h   g e k e n n z e i c h n e t ,
daß der Abzweigkanal (14) an seinem oberen Ende ein
Außengewinde (15.1) und ein Innengewinde (15.2)
aufweist.

8. Einrichtung nach wenigstens einem der vorstehenden
Ansprüche,
d a d u r c h   g e k e n n z e i c h n e t ,
daß in den Abzweigkanal (14) ein aus Metall, vorzugsweise Rotguß oder Messing bestehendes Gewindeteil (15) eingespritzt ist.

9. Einrichtung nach wenigstens einem der vorstehenden
Ansprüche,
d a d u r c h   g e k e n n z e i c h n e t ,
daß das Gehäuse (11) einen Ventilbereich
und einen den Hauptkanal (12) umgebenden Zylinderfortsatz (30) und auf der anderen Seite des Ventilbereiches einen kurzen Zylinderansatz (31) aufweist.

10. Einrichtung nach Anspruch 9,
d a d u r c h   g e k e n n z e i c h n e t ,
daß Zugstabkanäle (27.1, 27.2) mit nach innen
gewölbten Zugstabkanalwänden (28) zur Hauptkanalachse (12.1) diagonal gegenüberliegend eingeformt
sind und der obere Zugstabkanal (27.1) mit seiner
Zugstabkanalwand (28) unmittelbar in den wulstförmigen Dichtsitz (25) diesen abstützend übergeht.

11. Abzweig- und Absperreinrichtung (10), insbesondere nach wenigstens einem der vorstehenden Ansprüche, d a d u r c h   g e k e n n z e i c h n e t , daß das Absperrorgan des Hauptabsperrventils (65) einen Faltbalg (66) aufweist, welcher mit dem Halteteil (21) der Gewindespindel (22) dichtend im Gehäuse (11) eingespannt ist und im Bereich des Verschlußorgans (71, 72) eine Druckplatte (73) aufweist, auf der sich die Gewindespindel (22) abstützt.

12. Einrichtung nach Anspruch 11, d a d u r c h   g e k e n n z e i c h n e t , daß der Faltbalg (66) aus einem Werkstoff auf der Basis von Äthylen-Propylen-Terpolymer-Kautschuk (EPDM) besteht.

Fig. 1

Fig. 2

Fig. 4

Fig. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 811 178 (MESA-METALLWERKE E. SAUTER) * Anspruch 1 * | 1 | F 16 K 27/02 E 03 C 1/02 |
| Y | CA-A- 920 912 (DYCKES SPRINKLER CO.) * Ansprüche 1,2; Seite 8, Zeilen 5-8 * | 1,3 | |
| A | CH-A- 335 274 (METALLGIESSEREI & ARMATURENFABRIK LYSS) * Figuren 1-3 * | 1 | |
| A | DE-A-1 550 537 (L. SCHNELLBÄCHER) | | |
| A | DE-A-1 750 052 (C. RALET) | | RECHERCHIERTE SACHGEBIETE (Int. Cl 4) |
| A | DE-A-2 346 158 (J. HALLER-EGERT) | | F 16 K 27/00 F 16 K 11/00 F 16 K 24/00 F 16 K 1/00 |
| A | DE-A-2 846 314 (J. HALLER-EGERT) | | E 03 C 1/00 E 03 B 7/00 F 16 K 41/00 |
| A | DE-B-1 288 391 (DANFOSS A/S) | | |
| A | DE-C- 743 622 (H. SAUVEUR) | | |
| | --- -/- | | |

Der vorliegende Recherchenbericht wurde für alle Patentansprüche erstellt

| Recherchenort DEN HAAG | Abschlußdatum der Recherche 12-04-1985 | Prüfer DE SMET F.P. |
|---|---|---|

**EUROPÄISCHER RECHERCHENBERICHT**

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 283 117 (GOFFTON LTD.) | | |

-----

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 12-04-1985 | DE SMET F.P. |